# EUROPÄISCHE PATENTANMELDUNG

(11) **EP 1 787 875 A1**
(43) Veröffentlichungstag der Anmeldung: **23.05.2007**
(21) Anmeldenummer: 06023766.6
(22) Anmeldetag: 15.11.2006
(51) Int. Cl.: B60R 22/34

(54) **Rahmen für einen Sicherheitsgurtaufroller**

(30) Priorität: 22.11.2005 DE 102005055681
(71) Anmelder: TRW Automotive GmbH, 73553 Alfdorf (DE)
(72) Erfinder: Fauser, Erwin, 73527 Schwäbisch Gmünd (DE)
(74) Vertreter: Sties, Jochen

(57) **Zusammenfassung**

Ein Rahmen für einen Sicherheitsgurtaufroller hat eine Rückwand (12) und einen Befestigungsabschnitt, der der Befestigung und/oder der Vorpositionierung des Rahmens (10) an einem Abschnitt (22) eines fahrzeugfesten Bauteils dient, wobei der Befestigungsabschnitt einstückig mit der Rückwand (12) gebildet ist.

## Beschreibung

Die Erfindung betrifft einen Rahmen für einen Sicherheitsgurtaufroller.

Rahmen von Sicherheitsgurtaufrollern können auf unterschiedliche Art und Weise an einem Abschnitt eines fahrzeugfesten Bauteils befestigt werden.

Aus dem Stand der Technik sind Rahmen bekannt, an die ein abgekröpfter Beschlag angenietet oder angeschweißt ist, der eine Einpreßmutter hat. Der Beschlag wird auf die Fahrzeugkarosserie gesteckt und daran mit einem Befestigungsmittel fixiert. Der Beschlag wird in einem separaten Arbeitschritt an den Rahmen genietet oder geschweißt. Die Herstellung des Rahmens ist deswegen teuer.

Einpreßmuttern können auch an die Fahrzeugkarosserie selbst genietet oder geschweißt sein, was mit großen Arbeitsaufwand verbunden ist. Der Rahmen des Sicherheitsgurtaufrollers hat dann eine Öffnung, durch die das Befestigungsmittel in die Einpreßmutter geschraubt wird.

Die Aufgabe der Erfindung besteht darin, einen Rahmen für einen Sicherheitsgurtaufroller herzustellen, der einfach an einer Fahrzeugkarosserie montiert werden kann.

Zu diesem Zweck sieht die Erfindung einen Rahmen für einen Sicherheitsgurtaufroller mit einer Rückwand und einem Befestigungsabschnitt vor, der der Befestigung und/oder der Vorpositionierung des Rahmen an einem Abschnitt eines fahrzeugfesten Bauteils dient, wobei der Befestigungsabschnitt einstückig mit der Rückwand gebildet ist. Der Rahmen selbst weist also den Befestigungsabschnitt auf und nicht - wie es aus dem Stand der Technik bekannt war - ein separates Teil. Deswegen muß kein separates Teil am Rahmen befestigt, d.h. geschweißt oder genietet werden, wodurch die Kosten bei der Herstellung des Rahmens verringert werden. Der Befestigungsabschnitt kann so ausgebildet sein, das er am Abschnitt des fahrzeugfesten Bauteils aufgesteckt werden kann, wodurch der Rahmen vorpositioniert ist. Der Rahmen kann dann mit einem Befestigungsmittel einfach und schnell am fahrzeugfesten Bauteil fixiert werden.

Der Befestigungsabschnitt ist bevorzugt eine Lasche, wobei die Lasche ein umgebogener Teil der Rückwand ist. Der Winkel zwischen der Rückwand und der Lasche kann beliebig sein.

Insbesondere ist die Lasche um 180° bezüglich der Rückwand umgebogen. Die umgebogene Lasche kann dann auf eine Aussparung am Abschnitt des fahrzeugfesten Bauteils aufgesteckt werden, wodurch der Rahmen vorpositioniert ist.

Bevorzugt ist zwischen der Lasche und der Rückwand ein Aufnahmeraum gebildet, wobei der Aufnahmeraum den Abschnitt des fahrzeugfesten Bauteils aufnehmen kann, wodurch der Rahmen am fahrzeugfesten Bauteil vorpositioniert wird. Der Aufnahmeraum wird beim Anbringen des Rahmens an der Fahrzeugkarosserie auf den Abschnitt des fahrzeugfesten Bauteils aufgesteckt, so daß der Rahmen vorpositioniert ist. Anschließend wird ein Befestigungsmittel eingeschraubt, wodurch der Rahmen an der Fahrzeugkarosserie fixiert ist.

Gemäß einer Ausführungsform ist die Lasche durch Stanzen der Rückwand und anschließendes Umbiegen gebildet. Die Lasche ist einstückig mit dem Rahmen hergestellt, wobei der Rahmen aus der Rückwand und zwei Seitenwänden besteht. Nach dem Ausstanzen des Blechteils wird die Lasche umgebogen. Die Seitenwände werden dabei entweder vor oder nach dem Umbiegen der Lasche um 90° bezüglich der Rückwand abgewinkelt.

Bevorzugt ist ein Gewindeabschnitt vorgesehen, der ein Befestigungsmittel, das z.B. eine Schraube ist, aufnehmen kann.

Der Gewindeabschnitt kann am Befestigungsabschnitt vorgesehen sein und mit einer Öffnung in der Rückwand fluchten oder an der Rückwand und mit einer Öffnung im Befestigungsabschnitt fluchten. Das Befestigungsmittel, das z.B. eine Schraube ist, wird nach dem Anbringen des Rahmens am Abschnitt des fahrzeugfesten Bauteils durch die Öffnung in der Rückwand bzw. im Befestigungsabschnitt und eine Bohrung im Abschnitt des fahrzeugfesten Bauteils in den Gewindeabschnitt, der am Befestigungsabschnitt bzw. an der Rückwand vorgesehen ist, geschraubt. Die Bohrung des Abschnitts des fahrzeugfesten Bauteils fluchtet dabei ebenfalls mit der Öffnung und dem Gewindeabschnitt. Die Befestigung des Rahmens am Abschnitt des fahrzeugfesten Bauteils kann so entweder vom Fahrzeuginnenraum aus erfolgen oder von der Seite des Abschnitts des fahrzeugfesten Teils, die dem Sicherheitsgurtaufroller abgewandt ist.

Der Gewindeabschnitt ist z.B. ein separates Teil, das an dem Befestigungsabschnitt oder an der Rückwand angebracht ist. Der Gewindeabschnitt wird also nach dem Ausstanzen der Rückwand und der Seitenteile am Befestigungsabschnitt bzw. an der Rückwand angebracht.

Auch kann der Gewindeabschnitt einstückig mit dem Befestigungsabschnitt oder mit der Rückwand ausgebildet sein, wodurch ein nachträgliches Anbringen des Gewindeabschnitts entfällt.

Weitere Merkmale und Vorteile ergeben sich aus den Unteransprüchen.

Die Erfindung wird nachfolgend anhand von Ausführungsformen beschrieben, die in den Zeichnungen dargestellt sind. In den Zeichnungen zeigen:
- Figur 1 eine perspektivische Ansicht eines erfindungsgemäßen Rahmens gemäß einer ersten Ausführungsform für einen Sicherheitsgurtaufroller,
- Figur 2 eine perspektivische Ansicht des Rahmens mit einem Abschnitt eines fahrzeugfesten Bauteils,
- Figur 3 eine Schnittansicht des Rahmens entlang der Linie III-III in Figur 2 mit einem einstückig mit dem Rahmen ausgebildeten Gewindeabschnitt,
- Figur 3a einen vergrößerten Ausschnitt des mit X bezeichneten Bereichs in Figur 3 mit einem separaten Gewindeabschnitt,
- Figur 4 a eine Draufsicht des Rahmens mit umgebogener Lasche und nicht abgewinkelten Seitenwänden,
- Figur 4b eine Schnittansicht des Rahmens mit umgebogener Lasche und nicht abgewinkelten Seitenwänden,
- Figur 5 eine perspektivische Ansicht des Rahmens mit abgewinkelten Seitenwänden und nicht umgebogener Lasche,
- Figur 6 eine Seitenansicht eines erfindungsgemäßen Rahmens gemäß einer zweiten Ausführungsform für einen Sicherheitsgurtaufroller mit einem einstückig mit dem Rahmen ausgebildeten Gewindeabschnitt, und
- Figur 6a einen vergrößerten Ausschnitt des mit Y bezeichneten Bereichs in Figur 6 mit einem separaten Gewindeabschnitt.

In den Figuren ist ein Rahmen 10 für einen Sicherheitsgurtaufroller gezeigt. Der Rahmen 10 hat eine Rückwand 12 und rechtwinklig dazu zwei Seitenwände 14.

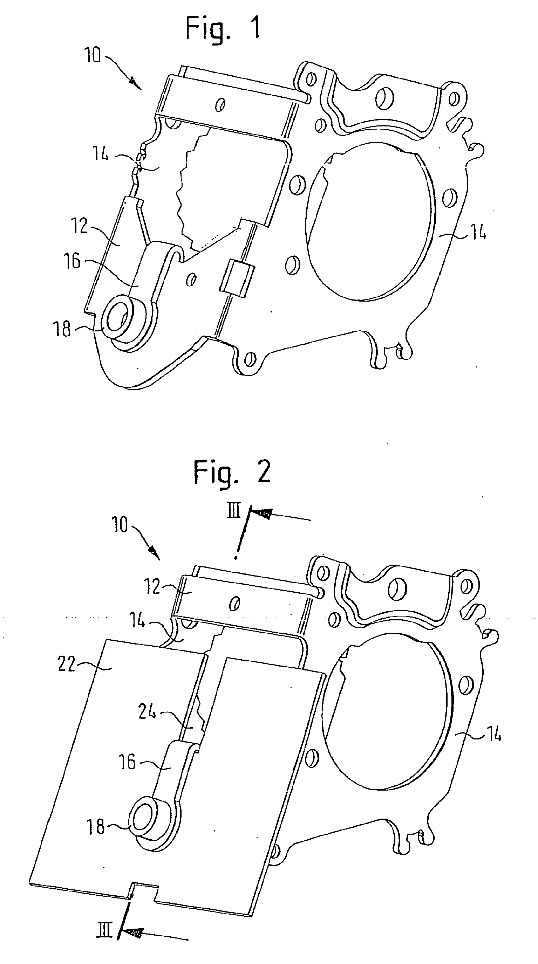

Im folgenden ist die erste Ausführungsform beschrieben, die in den Figuren 1 bis 5 gezeigt ist.

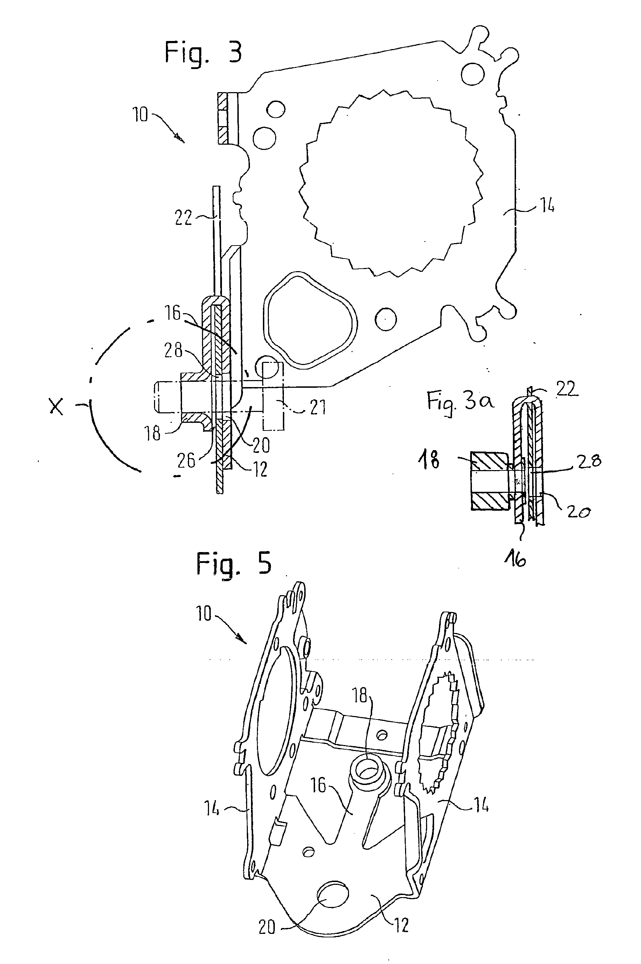

Einstückig mit der Rückwand 12 ist ein Befestigungsabschnitt in Form einer Lasche 16 ausgebildet. Am Ende der Lasche 16 ist ein Gewindeabschnitt 18 vorgesehen, der Teil der Lasche 16 ist (Figur 3).

Die Lasche 16 ist - wie insbesondere in Figur 3 gezeigt - um 180° bezüglich der Rückwand 12 umgebogen, d.h. der Winkel zwischen der Rückwand 12 und der Lasche 16 beträgt 180°.

Die Rückwand 12 hat eine Öffnung 20, durch die eine Schraube 21 geführt werden kann, die anschließend in den mit der Öffnung 20 fluchtenden Gewindeabschnitt 18 geschraubt wird.

Das Anbringen des Rahmens 10 an einem Abschnitt 22 eines fahrzeugfesten Bauteils (siehe Figuren 2 und 3) erfolgt folgendermaßen:

Der Rahmen 10 mit der umgebogenen Lasche 16 wird auf eine Aussparung 24 im Abschnitt 22 des fahrzeugfesten Bauteils aufgesteckt. Ein Aufnahmeraum 26, der zwischen der Rückwand 12 und der umgebogenen Lasche 16 gebildet ist, nimmt dann den Abschnitt 22 des fahrzeugfesten Bauteils auf, und der Rahmen 10 ist an dem Abschnitt 22 vorpositioniert.

Eine Bohrung 28 (Figur 3) im Abschnitt 22 des fahrzeugfesten Bauteils fluchtet nach dem Vorpositionieren des Rahmens 10 mit dem Gewindeabschnitt 18 und der Öffnung 20 in der Rückwand 12. Ein Monteur kann dann vom Fahrzeuginnenraum aus die Schraube 21 durch die Öffnung 20 der Rückwand 12 und die Bohrung 28 im fahrzeugfesten Teil in den Gewindeabschnitt 18 einschrauben, wodurch der Rahmen 10 fixiert ist.

Anstatt der in Figur 3 gezeigten Ausführung, bei der der Gewindeabschnitt 18 Teil der Lasche 16 ist, könnte der Gewindeabschnitt 18 ein separates Teil sein, das an der Lasche 16 angebracht wird (Figur 3a). Der Gewindeabschnitt 18 ist dann ein Teil einer Einpreßmutter, einer Nietmutter, einer Schweißmutter oder einer Rändelmutter sein.

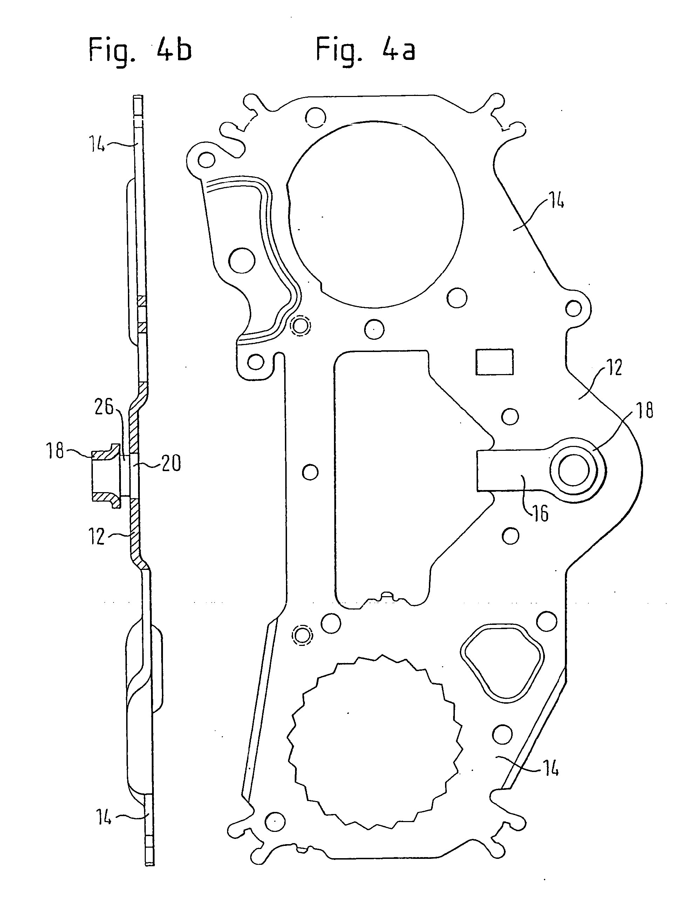

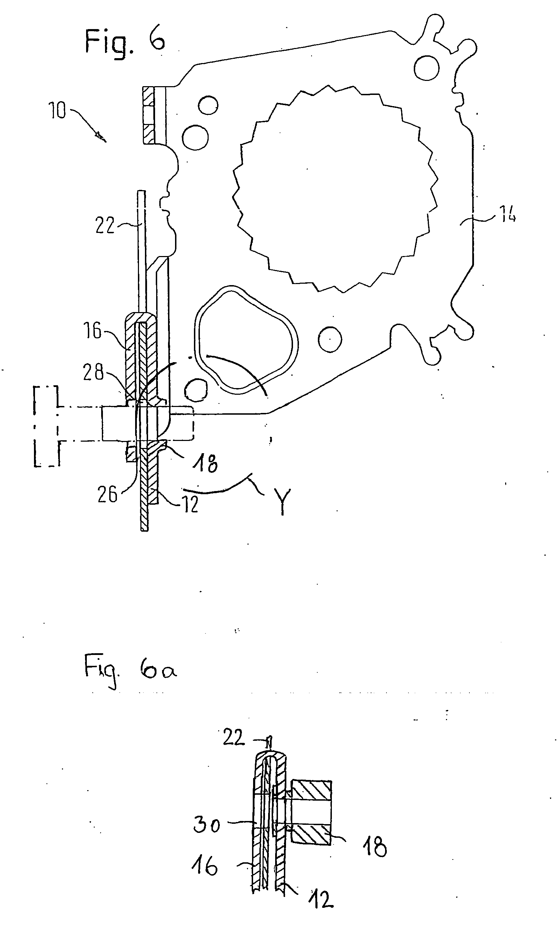

Die Herstellung des Rahmens 10 wird in zwei Ausführungsformen anhand der Figuren 4a, 4b und 5 beschrieben:

Aus einem ebenen, großflächigem Blechteil werden maschinell die Umrisse der Rückwand 12 und der Seitenwände 14 ausgestanzt. Dabei werden u.a. Öffnungen für Niete, für die Aufnahme einer Gurtspule und Verzahnungen, die für eine Sperrung der Gurtspule notwendig sind, ausgestanzt und ein Gewindeabschnitt 18 an der Lasche 16 z.B. durch Einpressen, Anschweißen usw. einer Mutter gebildet.

In der Ausführungsform gemäß den Figuren 4a und 4b wird anschließend die Lasche 16 mit dem Gewindeabschnitt 18 um 180° bezüglich der Rückwand 12 umgebogen. In dem Zustand, in dem die Rückwand 12 und die Seitenwände 14 flach sind, können die gestanzten Teile an eine andere Verarbeitungsstelle transportiert werden, an der die Seitenwände 14 um jeweils 90° zur Rückwand 12 abgewinkelt werden. Nach dem Einbau einer Gurtspule, eines Sperrmechanismus, eines Kraftbegrenzersystems usw. kann der zusammengebaute Sicherheitsgurtaufroller über den Rahmen 10 am Abschnitt 22 des fahrzeugfesten Bauteils befestigt werden.

Figur 5 zeigt eine weitere Möglichkeit zur Herstellung des Rahmens 10. Hier werden nach dem Ausstanzen der Rückwand 12 und der Seitenteile 14 und ggfs. nach dem Anbringen des Gewindeabschnitts 18 zuerst die Seitenwände 14 abgewinkelt und anschließend die Lasche 16 um 180° umgebogen.

In Figur 6 ist eine zweite Ausführungsform des Rahmens 10 für den Sicherheitsgurtaufroller gezeigt. Diese Ausführungsform unterscheidet sich von der in den Figuren 1 bis 5 gezeigten Ausführungsform nur darin, daß der Befestigungsabschnitt, der in Form der Lasche 16 ausgebildet ist, keinen Gewindeabschnitt 18 aufweist sondern eine Öffnung 30. Der Gewindeabschnitt 18 ist in dieser Ausführungsform Teil der Rückwand 12.

Beim Anbringen des Rahmens 10 am fahrzeugfesten Bauteils wird wiederum die Lasche 16 auf die Aussparung 24 im Abschnitt 22 des fahrzeugfesten Bauteils aufgesteckt. Nach dem Vorpositionieren fluchtet der Gewindeabschnitt 18 in der Rückwand 12, die Bohrung 28 im Abschnitt 22 des fahrzeugfesten Bauteils und die Öffnung 30 in der Lasche 16 zueinander. Ein Monteur kann dann von der dem Rahmen 10 abgewandten Seite des Abschnitts 22 des fahrzeugfesten Bauteils aus die Schraube 21 durch die Öffnung 30 der Lasche 16 und die Bohrung 28 im fahrzeugfesten Teil in den Gewindeabschnitt 18 einschrauben, wodurch der Rahmen 10 fixiert ist.

Auch kann der Gewindeabschnitt 18 als separates Teil an der Rückwand 12 angebracht sein und Teil einer Einpreßmutter, einer Nietmutter, einer Schweißmutter oder einer Rändelmutter sein.

## Patentansprüche

1. Rahmen für einen Sicherheitsgurtaufroller, mit einer Rückwand (12) und einem Befestigungsabschnitt, der der Befestigung und/oder der Vorpositionierung des Rahmens (10) an einem Abschnitt (22) eines fahrzeugfesten Bauteils dient, wobei der Befestigungsabschnitt einstückig mit der Rückwand (12) gebildet ist.

2. Rahmen nach Anspruch 1, **dadurch gekennzeichnet, daß** der Befestigungsabschnitt eine Lasche (16) ist, wobei die Lasche (16) ein umgebogener Teil der Rückwand (12) ist.

3. Rahmen nach Anspruch 2, **dadurch gekennzeichnet, daß** die Lasche (16) um 180° bezüglich der Rückwand (12) umgebogen ist.

4. Rahmen nach Anspruch 2 oder 3, **dadurch gekennzeichnet, daß** ein Aufnahmeraum (26) zwischen der Lasche (16) und der Rückwand (12) gebildet ist, wobei der Aufnahmeraum (26) den Abschnitt (22) des fahrzeugfesten Bauteils aufnehmen kann, wodurch der Rahmen (10) an dem fahrzeugfesten Bauteil vorpositioniert wird.

5. Rahmen nach einem der Ansprüche 2 bis 4, **dadurch gekennzeichnet, daß** die Lasche (16) durch Stanzen der Rückwand (12) und anschließendes Umbiegen gebildet ist.

6. Rahmen nach einem der vorhergehenden Ansprüche, **dadurch gekennzeichnet, daß** ein Gewindeabschnitt (18) am Rahmen (10) vorgesehen ist.

7. Rahmen nach Anspruch 6, **dadurch gekennzeichnet, daß** der Gewindeabschnitt (18) am Befestigungsabschnitt oder an der Rückwand (12) vorgesehen ist und daß der Gewindeabschnitt (18) mit einer Öffnung (20) in der Rückwand (12) bzw. einer Öffnung (30) im Befestigungsabschnitt fluchtet.

8. Rahmen nach Anspruch 6 oder 7, **dadurch gekennzeichnet, daß** der Gewindeabschnitt (18) ein separates Teil ist, das an dem Befestigungsabschnitt oder an der Rückwand (12) angebracht ist.

9. Rahmen nach Anspruch 8, **dadurch gekennzeichnet, daß** der Gewindeabschnitt (18) Teil einer Einpreßmutter, einer Nietmutter, einer Schweißmutter oder einer Rändelmutter ist.

10. Rahmen nach Anspruch 6 oder 7, **dadurch gekennzeichnet, daß** der Gewindeabschnitt (18) einstückig mit dem Befestigungsabschnitt oder mit der Rückwand (12) ausgebildet ist.
